# EUROPÄISCHE PATENTANMELDUNG

(11) **EP 4 286 304 A1**
(43) Veröffentlichungstag der Anmeldung: **06.12.2023**
(21) Anmeldenummer: 23176288.1
(22) Anmeldetag: 31.05.2023
(51) Int. Cl.: B65G 47/96

(54) **FÖRDERANLAGE MIT EINER PRODUKTABGABEKONTROLLE**

(30) Priorität: 01.06.2022 CH 6642022
(71) Anmelder: FERAG AG, 8340 Hinwil (CH)
(72) Erfinder: BRETZ, Markus, 8704 Herrliberg (CH)
(74) Vertreter: Frei Patent Attorneys

(57) **Zusammenfassung**

Die Erfindung betrifft eine Förderanlage (1) zum Fördern und Abgeben von Fördergütern (60), enthaltend einen Schalenförderer (40) mit einer Mehrzahl von entlang einer Förderbahn (2) bewegbaren Förderschalen (7), wobei die Förderschalen (7) jeweils mindestens ein Förderschalenelement (15-20) umfassen, sowie enthaltend eine entlang der Förderbahn (2) der Förderschalen (7) angeordnete Sensoreinrichtung (50) zum Detektieren von Fördergütern (60). Das mindestens eine Förderschalenelement (15-20) weist mindestens einen Durchlass (23, 28, 29) auf. Die Sensoreinrichtung (50) ist derart ausgebildet und angeordnet, dass ein Messstrahlengang (52) der Sensoreinrichtung (50) in einer definierten Förderposition des mindestens einen Förderschalenelementes (15-20) durch den mindestens einen Durchlass (23, 28, 29) am mindestens einen Förderschalenelement (15-20) gerichtet ist.

## Beschreibung

Die Erfindung liegt auf dem Gebiet der Förder- und Sortiertechnik und betrifft eine Förderanlage mit einem Schalenförderer zum Fördern und Abgeben von Fördergütern. Der Schalenförderer enthält eine Mehrzahl von entlang einer Förderbahn bewegbaren Förderschalen, wobei die Förderschalen jeweils mindestens ein Förderschalenelement umfassen. Ferner enthält die Förderanlage mindestens eine entlang der Förderbahn der Förderschalen angeordnete Sensoreinrichtung zum Detektieren von Fördergütern.

Förderanlagen der erfindungsgemässen Gattung dienen insbesondere dazu, entlang einer Förderbahn geförderte Fördergüter durch Abgabe der Fördergüter an verschiedene, entlang der Förderbahn angeordnete Abgabestationen, nach definierten Kriterien zu sortieren.

So sind Sortierförderer bekannt, gemäss welchen die Fördergüter in kippbaren Förderschalen, so genannten Kippschalen, längs einer Förderbahn an Abgabestationen entlang gefördert werden. Die kippbaren Förderschalen umfassen schwenkbare Seitenwände, welche zwecks Abgabe der Fördergüter heruntergeschwenkt bzw. heruntergeklappt werden können. Das Fördergut wird beim Herunterschwenken der abgabeseitigen Seitenwand durch Abgleiten von der zur Abgabeseite hin geneigten Förderschale mittels Schwerkraftunterstützung an der Abgabestation abgeben. Das Fördergut gleitet bzw. rutscht dabei an der Abgabestation über die heruntergeschwenkte Seitenwand ab und wird an eine Übernahmeeinrichtung abgegeben.

Die Veröffentlichung CH 710 851 A1 offenbart einen oben genannten Sortierförderer mit Kippschalen, welche schwenkbare Seitenwände zwecks Abgabe der geförderten Fördergüter enthalten.

Für einen einwandfreien Förder- und Sortierbetrieb ist es wichtig, dass die Förderung der Fördergüter, insbesondere die Abgabe der Fördergüter an einer Abgabestation, mittels entsprechender Sensoreinrichtungen überwacht bzw. verfolgt wird.

So ist es beispielsweise bekannt, die Abgabe der Fördergüter an einer Abgabestation zu überwachen, um Festzustellen, ob ein Fördergut tatsächlich abgegeben oder weitergefördert wurde. Ferner werden auch Sensoreinrichtungen eingesetzt, um an einer definierten Förderposition entlang der Förderbahn die Präsenz von Fördergütern in den Förderschalen zu detektieren bzw. die Fördergüter in den Förderschalen zu identifizieren.

Die aus dem Stand der Technik bekannten Sensoreinrichtungen, wie RFID-Lesegeräte, sind jedoch in der Regel komplex und folglich teuer in der Beschaffung und aufwändig im Betrieb und Unterhalt. Je komplexer die Sensoreinrichtungen sind, desto anfälliger sind diese in der Regel für Störungen und Fehlmessungen. Ferner nehmen die Sensoreinrichtung in der Förderanlage häufig viel Platz in Anspruch und schränken die Flexibilität im Aufbau und im Betrieb der Förderanlage stark ein.

Es ist daher eine Aufgabe der vorliegenden Erfindung eine Förderanlage mit einer Sensoreinrichtung zum Detektieren der Anwesenheit eines Förderguts vorzuschlagen, welche einfach im Aufbau, kompakt, robust sowie kostengünstig in der Anschaffung und im Betrieb ist. Ferner soll die Sensoreinrichtung möglichst wenig Platz in Anspruch nehmen und eine hohe Flexibilität bezüglich des Aufbaus und Betriebs der Förderanlage sicherstellen.

Eine weitere Aufgabe besteht darin, eine entsprechende Sensoreinrichtung zum Detektieren von an einer Abgabestation abgegebenen Fördergütern vorzuschlagen.

Eine Aufgabe der vorliegenden Erfindung ist insbesondere die zielgesicherte Abgabe von Fördergütern an Abgabestationen. Das heisst, die effektive Abgabe von Fördergütern soll durch entsprechende Sensormittel erfasst werden.

Eine weitere Aufgabe besteht darin, eine entsprechende Sensoreinrichtung zum Detektieren von in einer Förderschale geförderten Fördergütern vorzuschlagen.

Eine weitere Aufgabe besteht darin, eine entsprechende Sensoreinrichtung zum Detektieren von auf dem Schalenförderer fehlplatzieren Fördergütern vorzuschlagen.

Die Aufgabe wird durch die Merkmale der unabhängigen Ansprüche 1 und 14 gelöst. Die abhängigen Ansprüche, die Beschreibung und die Figuren beinhalten besondere Ausführungsformen und Weiterbildungen der Erfindung.

Die Förderanlage zum Fördern und Abgeben von Fördergütern enthält einen Schalenförderer mit einer Mehrzahl von entlang einer Förderbahn bewegbaren Förderschalen, wobei die Förderschalen jeweils mindestens ein Förderschalenelement umfassen. Ferner enthält die Förderanlage eine entlang der Förderbahn der Förderschalen angeordnete Sensoreinrichtung zum Detektieren von Fördergütern.

Die Erfindung zeichnet sich dadurch aus, dass das mindestens eine Förderschalenelement mindestens einen Durchlassbereich, insbesondere zum Durchlassen eines Messstrahls, aufweist, und die Sensoreinrichtung derart ausgebildet und angeordnet ist, dass ein Messstrahlengang der Sensoreinrichtung in einer definierten Förderposition des mindestens einen Förderschalenelementes entlang der Förderbahn durch den mindestens einen Durchlassbereich am mindestens einen Förderschalenelement gerichtet ist.

Das Förderschalenelement bildet insbesondere eine Auflagefläche für die Stückgüter aus.

Der Messstrahlengang beschreibt den geometrischen Verlauf eines von der Sensoreinrichtung ausgesendeten Messstrahls. Der Messstrahlengang ist insbesondere linear.

Der Messstrahlengang ist insbesondere von unten gegen den mindestens einen Durchlassbereich am mindestens einen Förderschalenelement gerichtet. Der Messstrahlengang kann z. B. senkrecht bzw. vertikal von unten oder von schräg unten gegen den mindestens einen Durchlassbereich am mindestens einen Förderschalenelement gerichtet sein.

Der Messstrahlengang verläuft insbesondere parallel zur Flächennormalen des Förderschalenelements, durch dessen Durchlassbereich der Messstrahlengang gerichtet ist.

Der Messstrahlengang verläuft insbesondere im Wesentlichen quer zur Förderrichtung. Der Messstrahlengang verläuft insbesondere senkrecht zur Förderrichtung.

Die Sensoreinrichtung enthält insbesondere mindestens eine Sensoreinheit zum Erzeugen und Detektieren eines Messstrahls. Die Sensoreinheit enthält insbesondere einen Sender zum Aussenden eines Messstrahls. Die Sensoreinheit enthält insbesondere einen Empfänger bzw. Sensor zum Empfangen eines Messsignals. Das Messsignal wird insbesondere durch den Messstrahl induziert. Das Messsignal ist insbesondere ein wenigstens teilweise reflektierter Messstrahl.

Empfänger und Sender der Sensoreinheit können in einer gemeinsamen physischen Einheit, z. B. in einem Gehäuse untergebracht sein. Sender und Empfänger können auch räumlich voneinander getrennt in verschiedenen physischen Einheiten, z. B. in verschiedenen Gehäusen, untergebracht sein.

Die Sensoreinrichtung bzw. die mindestens eine Sensoreinheit der Sensoreinrichtung ist insbesondere ortsfest angeordnet.

Entsprechend bewegen sich die Förderschalen längs der Förderbahn an der Sensoreinrichtung bzw. an der mindestens einen Sensoreinheit der Sensoreinrichtung vorbei, wobei sich der mindestens eine Durchlassbereich, je nach dessen Ausgestaltung, in einer definierten Förderposition oder entlang eines definierten Förderbahnabschnitts der Förderschale entlang der Förderbahn durch den Messstrahlengang der Sensoreinrichtung bzw. der mindestens einen Sensoreinheit bewegt.

Die Sensoreinrichtung ist nun insbesondere dazu ausgelegt, eine Überdeckung des durch den mindestens einen Durchlassbereichs führenden Messstrahlengangs bzw. Messstrahls in dem mindestens einen Förderschalenelement durch ein Fördergut zu detektieren. In anderen Worten kann die Sensoreinrichtung ein den mindestens einen Durchlassbereich wenigstens teilweise überdeckendes Fördergut detektieren.

Der Messvorgang erfolgt jeweils in einem Messintervall, in welchem sich der mindestens eine Durchlassbereich durch den Messstrahlengang bzw. Messstrahl der Sensoreinrichtung bzw. der mindestens einen Sensoreinheit bewegt. Das Messintervalle ist entsprechend über die Steuerungseinrichtung mit der Bewegung der Förderschalen bzw. des mindestens einen Durchlassbereichs bzw. mit dem Takt der Förderschale entlang der Förderbahn synchronisiert. Auf diese Weise wird gewährleistet, dass nur dann ein Messvorgang erfolgt, wenn der mindestens eine Durchlassbereich sich durch den Messstrahlengang bzw. Messstrahl der Sensoreinrichtung bzw. der mindestens einen Sensoreinheit bewegt. Andernfalls würde die Sensoreinheit auch die Wand des Förderschalenelementes detektieren, was zu Fehlergebnissen führt.

Das mindestens eine Förderschalenelement kann mehrere, voneinander beabstandete Durchlassbereiche, insbesondere Durchlassöffnungen, aufweisen.

Mehrere Durchlassbereiche können in Förderrichtung bzw. entlang der Förderbahn aufeinanderfolgend angeordnet sein.

Mehrere Durchlassbereiche können zum Beispiel in Förderrichtung bzw. entlang der Förderbahn hintereinander und in Reihe angeordnet sein. Dies hat den Vorteil, dass für mehrere Durchlassbereiche, welche sich durch den Messstrahlengang der Sensoreinheit bewegen aufeinanderfolgende Messintervalle durchgeführt werden können, und so über einen grösseren Förderstreckenabschnitt detektiert werden kann.

Mehrere Durchlassbereiche können jedoch auch in Förderrichtung bzw. entlang der Förderbahn aufeinanderfolgend jedoch insbesondere in Abgaberichtung des Fördergutes seitlich zueinander versetzt angeordnet sein. Mit dem seitlichen Versatz der Durchlassbereiche wird insbesondere die durch die kombinierte Abrutsch- und Förderbewegung des Fördergutes vollzogene Abrutschparabel bei der Abgabe des Fördergutes während der Messintervalle berücksichtigt.

Wie erwähnt, kann vorgesehen sein, dass mehrere Durchlassbereiche des mindestens einen Förderschalenelements den Messstrahlengang bzw. Messstrahl der Sensoreinrichtung bzw. der mindestens einen Sensoreinheit der Sensoreinrichtung durchqueren. Entsprechend kann das Detektieren des Fördergutes über mehrere Messintervalle erfolgen, wobei ein Messintervall jeweils an einen den Messstrahlengang durchquerenden Durchlassbereich gekoppelt ist.

Es ist möglich, dass die Durchlassbereiche bzw. Durchlassöffnungen im mindestens einen Förderschalenelement ein Lochmuster, insbesondere ein regelmässiges Lochmuster, insbesondere über die gesamte Fläche des mindestens einen Förderschalenelements ausbilden.

Das mindestens eine Förderschalenelement ist insbesondere flächig ausgebildet.

Das mindestens eine Förderschalenelement ist ganz besonders flächig, insbesondere plattenartig ausgebildet. Der Durchlassbereich kann auch dem flächigen bzw. plattenartigen Förderschalenelement entsprechen.

Das mindestens eine Förderschalenelement ist insbesondere wandartig ausgebildet und der mindestens eine Durchlassbereich ist in der Wandfläche des mindestens einen Förderschalenelements angeordnet. Der Durchlassbereich kann auch die Wandfläche bzw. das wandartige Förderschalenelement selbst ausbilden.

Der mindestens eine Durchlassbereich ist jedoch insbesondere eine Durchlassöffnung im Förderschalenelement. Die Durchlassöffnung zeichnet sich dadurch aus, dass diese durch das Förderschalenelement vollständig eingefasst bzw. umfasst wird.

Die mindestens eine Durchlassöffnung kann als Fenster ausgebildet sein.

Handelt es sich beim Messstrahl um elektromagnetische Strahlung aus dem sichtbaren Bereich, wie Licht, so ist kann der Durchlassbereich aus einem transparenten oder transluzenten Material, wie Glas oder Kunststoff, z. B. Acrylglas, ausgebildet sein. Eine als Fenster ausgebildeter Durchlassbereich ist in diesem Fall insbesondere ein Sichtfenster. Das Sichtfenster wird ebenfalls insbesondere durch ein transparentes oder transluzentes Material, wie Glas oder Kunststoff, z. B. Acrylglas ausgebildet. Das Glas kann ein kratzfestes gehärtetes Glas oder ein Saphirglas sein.

Die mindestens eine Durchlassöffnung kann allerdings auch als Durchbruch bzw. als Durchgangsöffnung bzw. Durchgangsloch ausgebildet sein.

Die mindestens eine Durchlassöffnung ist insbesondere länglich ausgebildet.

Die Länge der Durchlassöffnung ist insbesondere mindestens doppelt so gross ist wie deren Breite.

Die Längsachse der länglichen Durchlassöffnung verläuft insbesondere parallel zur Förderrichtung bzw. ist insbesondere parallel zur Förderrichtung ausgerichtet.

Dadurch bewegt sich die Durchlassöffnung entlang eines der Längsausdehnung der Durchlassöffnung entsprechenden Förderbahnabschnitts durch den Messstrahlengang bzw. Messstrahl der Sensoreinrichtung bzw. der mindestens einen Sensoreinheit. Dies erlaubt ein längeres Messintervall. Eine Durchlassöffnung in Form eines Durchbruchs kann in diesem Fall z. B. ein Langloch sein.

Zum Detektieren der Überdeckung des Durchlassbereichs bzw. des Messtrahlengangs oder Messstrahls durch ein Fördergut wird vom Sender der Sensoreinrichtung bzw. der Sensoreinheit ein Messstrahl ausgesendet. Dieser ist wie bereits erörtert zeitlich mit der Bewegung des Durchlassbereichs entlang der Förderbahn abgestimmt, so dass der Messstrahl durch den sich an der Sensoreinrichtung bzw. an der mindestens einen Sensoreinheit vorbeibewegenden, insbesondere oberhalb der Sensoreinrichtung bzw. der mindestens einen Sensoreinheit vorbeibewegenden Durchlassbereich gerichtet ist.

Wird nun der Durchlassbereich bzw. der Messstrahlengang oder Messstrahl durch ein Fördergut überdeckt, so wird der Messstrahl wenigstens teilweise am Fördergut reflektiert. Ein Empfänger der Sensoreinrichtung bzw. der mindestens einen Sensoreinheit detektiert den wenigstens teilweise durch den Durchlassbereich zurückreflektieren Messstrahl.

Die mindestens eine Sensoreinheit ist insbesondere eine optoelektronische Sensoreinheit. Die mindestens eine Sensoreinheit ist insbesondere eine Lasersensoreinheit.

Der Messstrahl ist insbesondere ein Lichtstrahl. In diesem Fall ist der Sender eine Lichtquelle. Der Messstrahl bzw. Lichtstrahl ist insbesondere aus dem sichtbaren elektromagnetischen Spektrum. Der Lichtstrahl ist insbesondere ein Laserstrahl. Der Lichtstrahl kann allerdings auch Infrarotlicht oder UV-Licht sein. Ein Laserstrahl hat jedoch den Vorteil, dass dieser sehr fokussiert ist und daher eine punktgenaue Messung auch durch einen vergleichsweise kleinen Durchlassbereich hindurch erlaubt.

Die mindestens eine Sensoreinheit ist insbesondere ein Reflexions-Lichttaster. Reflexions-Lichttaster detektieren Objekte durch Erfassen eines am Objekt reflektierten Messstrahls.

Die Sensoreinrichtung kann mehrere, voneinander beabstandete Sensoreinheiten, insbesondere mehrere optoelektronische Sensoreinheiten, wie Lasersensoreinheiten enthalten, deren Messstrahlengänge in Förderrichtung aufeinanderfolgend angeordnet sind.

Die in Förderrichtung aufeinanderfolgenden Messstrahlengänge der Sensoreinheiten können hintereinander in Reihe angeordnet sein. Die in Förderrichtung aufeinanderfolgenden Messstrahlengänge der Sensoreinheiten können auch zueinander seitlich versetzt angeordnet sein, insbesondere in Abgaberichtung. Auch hier dient der seitliche Versatz insbesondere der Berücksichtigung der bereits erwähnten Abrutschparabel des Fördergutes.

Die Sensoreinrichtung kann mehrere, voneinander beabstandete Sensoreinheiten, insbesondere mehrere optoelektronische Sensoreinheiten, wie Lasersensoreinheiten enthalten, deren Messstrahlengänge quer zur Förderrichtung aufeinanderfolgend angeordnet sind.

Die quer zur Förderrichtung aufeinanderfolgenden Messstrahlengänge der Sensoreinheiten können hintereinander in Reihe angeordnet sein. Die quer zur Förderrichtung aufeinanderfolgenden Messstrahlengänge der Sensoreinheiten können in Förderrichtung auch zueinander seitlich versetzt angeordnet sein.

Es ist auch eine Kombination der oben genannten Sensoranordnungen mit in Förderrichtung aufeinanderfolgend angeordneten sowie quer zur Förderrichtung aufeinanderfolgend angeordneten Messstrahlengängen möglich.

Weitere Ausführungen zu Sensoranordnungen folgen weiter unten im Zusammenhang mit der Beschreibung von besonderen Ausführungsformen.

Das Fördergut kann ein Stückgut, wie Paket oder Kiste, sein. Das Fördergut kann allerdings auch ein Schüttgut, z. B. in Form von Kleinteilen bzw. Massenteilen, sein. Solche Kleinteile bzw. Massenteile können z. B. Schrauben, Schraubverschlüsse, Rohlinge, etc. sein. Die Massenteile können in Behältnissen auf den Förderschalen gefördert werden.

Die Förderschalen des Schalenförderers können auf einer Förderkette angeordnet bzw. an dieser angebracht sein. Die Förderkette ist insbesondere endlos ausgebildet.

Die Förderkette enthält insbesondere Laufrollen, welche entlang mindestens einer Führungsschiene abrollen. Die mindestens eine Führungsschiene gibt die Förderbahn der Förderschalen vor. Die mindestens eine Führungsschiene bildet mindestens eine Abrollfläche für die Laufrollen aus. Die mindestens eine Führungsschiene kann einen Führungskanal ausbilden, in welchem die Laufrollen der Förderkette abrollen.

Die Förderschalen bilden, gegebenenfalls zusammen mit einem Kippmechanismus, Fördereinheiten aus.

Durch die Anordnung der Förderschalen auf einer Förderkette sind die Förderschalen während ihrer Förderung gleichmässig und konstant voneinander beabstandet. Überdies bewegen sich sämtliche Fördereinheiten bzw. Förderschalen mit derselben Fördergeschwindigkeit entlang der Förderbahn.

Die Förderschalen weisen jeweils insbesondere einen Aufnahmeraum zur Aufnahme eines Förderguts auf.

Die Förderschalen weisen zum Beispiel jeweils einen Förderschalenboden auf, welchem die Fördergüter aufliegen. Der Förderschalenboden begrenzt den Aufnahmeraum nach unten.

Der Messstrahlengang ist insbesondere seitlich vom Förderschalenboden gegen den mindestens einen Durchlassbereich am mindestens einen Förderschalenelement gerichtet.

Der Schalenförderer bildet insbesondere eine geschlossene Förderbahn aus. Der Schalenförderer enthält insbesondere einen Antrieb zum Antreiben der Förderschalen.

Die Förderanlage kann entlang der Förderbahn des Schalenförderers eine Abgabezone mit mindestens einer und insbesondere mit einer Mehrzahl von in Förderrichtung nacheinander angeordneten Abgabestationen zur Abgabe der Fördergüter von den Förderschalen an eine Übernahmevorrichtung enthalten. Die Fördergüter werden an den Abgabestationen in einer Abgaberichtung von den Förderschalen an eine Übernahmevorrichtung abgegeben. Die Abgaberichtung verläuft insbesondere quer zur Förderrichtung der Fördergüter. Die Abgabe der Fördergüter an den Abgabestationen erfolgt insbesondere durch ein seitliches Abrutschen der Fördergüter von den zuvor schräggestellten Förderschalen.

Die Übernahmevorrichtung kann Sammel- bzw. Auffangbehälter umfassen. Die Übernahmevorrichtung kann eine Fördervorrichtung, wie Horizontalförderer oder Linearförderer, zum Weg- bzw. Weiterfördem der abgegebenen Fördergüter umfassen. Die Übernahmevorrichtung kann auch Transportfahrzeuge, wie selbstfahrende Transportfahrzeug, oder Transportroboter umfassen.

Die Förderanlage kann entlang der Förderbahn des Schalenförderers eine Beladezone mit mindestens einer und insbesondere mit einer Mehrzahl von in Förderrichtung nacheinander angeordneten Beladestationen zum Beladen der Förderschalen mit Fördergütern enthalten. Die mindestens eine Beladestation ist insbesondere stromaufwärts von der Abgabezone angeordnet.

Die Förderanlage kann an der mindestens einen Beladestation und insbesondere stromabwärts nach der Beladezone sowie vor der Abgabezone eine Erfassungsstation zum Erfassen und Identifizieren der auf den Förderschalen geförderten Fördergüter enthalten. Ferner lassen sich zwecks Nachverfolgbarkeit die Fördergüter über die Erfassungsstation steuerungstechnisch den Förderschalen, auf welchen diese gefördert werden, zuordnen.

Die Erfassungsstation kann eine Ausleseeinrichtung zum Auslesen eines Informationsträgers am Fördergut, wie Strichcode, QR-Code oder RFID-Etikette, Zahlencode oder Zieladresse enthalten.

Ferner enthält die Förderanlage eine Steuerungseinrichtung. Die Steuerungseinrichtung dient z. B. der Steuerung des Antriebes des Schalenförderers sowie der Messintervalle der Messeinrichtung. Ferner kann die Steuerungseinrichtung auch die Förderung der Fördergüter auf Basis der an der Erfassungsstation erfassten Informationen zu den Fördergütern überwachen.

Die Förderanlage kann insbesondere eine Sortieranlage sein. So kann die Abgabe des Fördergutes an einer bestimmten Abgabestation aufgrund spezifischer Kriterien erfolgen, auf deren Grundlage die Steuerungseinrichtung die Abgabestation bestimmt, an welcher das Fördergut abgegeben werden soll. Entsprechend kann über die Steuerungseinrichtung z. B. das Herunterschwenken einer Seitenwand der Förderschale zwecks Abgabe des Fördergutes an der entsprechenden Abgabestation ausgelöst werden.

Die genannten Kriterien können z. B. besondere Eigenschaften der Fördergüter, wie Grösse, Gewicht, Form, Farbe, Art des Fördergutes oder Zustelladresse, sein.

Die Abgabe- bzw. Sortierkriterien können auch aus den nachfolgenden Arbeitsschritten, welche an den Fördergütern auszuüben sind, oder aus Folgeprozessen abgeleitet sein. Ferner können sich die Abgabe- bzw. Sortierkriterien auch aus einer Zuteilungsregel ableiten, welche z. B. eine gleichmässige Zuteilung der Fördergüter an verschiedene Bearbeitungsstationen umfassen kann.

Der Schalenförderer ist insbesondere ein Kippschalenförderer, bei welchem die Förderschalen als Kippschalen ausgebildet sind, welche sich zwecks Abgabe der Fördergüter mindestens auf eine Seite quer zur Förderrichtung kippen bzw. neigen lassen. Die Kippschalen lassen sich insbesondere zu einer ersten Abgabeseite hin und zu einer der ersten Abgabeseite gegenüber liegenden zweiten Abgabeseite hin quer zur Förderrichtung kippen bzw. neigen.

Die Kippbewegung in eine Kippstellungen bewirkt insbesondere eine Neigung der Auflagefläche bzw. des Förderschalenbodens der Kippschalen. Die Kippbewegung erfolgt insbesondere durch eine Schwenkbewegung der Kippschale um eine Schwenkachse. Die Kippachse bzw. Schwenkachse liegt insbesondere parallel zur Förderrichtung.

Die Kippschalen können mit einem Kippmechanismus wirkverbunden sein. Der Kippmechanismus ist insbesondere zwischen der Förderkette und der Kippschale angeordnet und verbindet diese miteinander. Der Kippmechanismus ist insbesondere Teil einer Fördereinheit.

Die Kippschalen werden insbesondere in gekippter bzw. geneigter Stellung durch die Abgabezone bewegt. Entsprechend werden die Kippschalen eingangs der Abgabezone zu einer Abgabeseite hin geneigt.

Während der Förderung ausserhalb der Abgabezone sind die Kippschalen in einer Förderposition insbesondere nicht gekippt, d.h. insbesondere horizontal ausgerichtet. Entsprechend werden die Kippschalen ausgangs der Abgabezone wieder in ihre Förderposition zurückgeschwenkt.

Die Förderschale kann Seitenwände aufweisen, welche den Aufnahmeraum seitlich begrenzen. Die Förderschale kann insbesondere eine erste und eine dieser gegenüberliegende zweite Seitenwand enthalten. Die erste und zweite Seitenwand sind zwecks Abgabe des Fördergutes an einer Abgabestation insbesondere quer zur Förderrichtung zu einer Abgabeseite hin von einer Rückhalteposition in eine Abgabeposition seitlich nach unten schwenkbar.

So kann eine in Förderrichtung linke Seitenwand seitlich nach unten zu einer linken Abgabeseite hin schwenkbar sein. So kann eine in Förderrichtung rechte Seitenwand seitlich nach unten zu einer rechten Abgabeseite hin schwenkbar sein. So können in Förderrichtung linke und rechte Seitenwände seitlich nach unten zu einer linken bzw. rechten Abgabeseite hin schwenkbar sein.

Die schwenkbare Seitenwand ist insbesondere über ein Gelenk, wie Scharnier, mit dem Förderschalenboden verbunden. Die schwenkbare Seitenwand kann z. B. über ein Steuerorgan heruntergeschwenkt werden. Das Heraufschwenken der Seitenwand in die Rückhalteposition kann ebenfalls über ein Steuerorgan erfolgen oder über Rückstellelemente, welche die Seitenwand mittels Rückstellkraft in Ihre Rückhalteposition zurückschwenken. Das Steuerorgan ist insbesondere über die Steuerungseinrichtung steuerbar.

Die Förderschale kann einen Verriegelungsmechanismus aufweisen, welcher die schwenkbare Seitenwand in der Rückhalteposition verriegelt. Der Verriegelungsmechanismus kann insbesondere über das Steuerorgan gelöst werden und so zu einem herunterschwenken der Seitenwand führen. Die schwenkbare Seitenwand ist insbesondere eine schwenkbare Klappe.

Die heruntergeschwenkte Seitenwand bildet an der Abgabestation insbesondere eine seitliche Rutschfläche für das abzugebende Fördergut aus.

Die Abgabestation kann eine Wegförderbahn zur Wegförderung der von der Förderschale abrutschenden Fördergüter ausbilden. Die heruntergeschwenkte Seitenwand überbrückt insbesondere den in Kippstellung geneigten Förderschalenboden mit der Wegförderbahn der Abgabestation. Die Wegförderbahn kann z. B. durch ein, insbesondere geneigtes Abgleitelement, ein Förderband, eine Rollenbahn oder durch ein Rollenteppich ausgebildet werden.

Gemäss einer Ausführungsvariante kann die Kippschale vor der mindestens einen Abgabestation gekippt werden und die mindestens eine Abgabestation in Kippstellung passieren. Die Abgabe des Fördergutes an der Abgabestation erfolgt durch Herunterschwenken der abgabeseitigen Seitenwand von der Rückhalteposition in die Abgabeposition.

Gemäss einer besonderen Ausführungsform der Erfindung entspricht das mindestens eine Förderschalenelement mit dem mindestens einen Durchlassbereich einer schwenkbaren Seitenwand, wie sie z.B. oben beschrieben ist. So enthält die genannte linke und/oder rechte Seitenwand mindestens einen Durchlassbereich.

Gemäss dieser Ausführungsform weist die Förderanlage mindestens eine, insbesondere eine Mehrzahl von entlang der Förderbahn angeordnete Abgabestation(en) zur Abgabe eines Fördergutes von der Förderschale an eine Übernahmeeinrichtung, wie weiter oben beschrieben auf.

Die Sensoreinrichtung bzw. die mindestens eine Sensoreinheit ist derart angeordnet, dass der Messstrahlengang der Sensoreinrichtung an der Abgabestation in einem definierten Messintervall durch den mindestens einen Durchlassbereich der an der Abgabestation zwecks Abgabe des Fördergutes heruntergeschwenkten Seitenwand der Förderschale gerichtet ist.

Der Messtrahlengang bzw. der Messstrahl ist hierbei während des Messintervalls insbesondere von unten durch den Durchlassbereich gerichtet. Der Messstrahlengang verläuft insbesondere parallel zur Flächennormalen der heruntergeschwenkten Seitenwand. Entsprechend ist die Sensoreinrichtung bzw. die mindestens eine Sensoreinheit an der Abgabestation unterhalb der heruntergeschwenkten Seitenwand angeordnet.

Die Sensoreinrichtung ist dazu ausgelegt, an der Abgabestation eine wenigstens teilweise Überdeckung des mindestens einen Durchlassbereich der heruntergeschwenkten Seitenwand durch ein abrutschendes Fördergut zu detektieren.

Die Sensoreinrichtung ist insbesondere dazu ausgelegt, an der Abgabestation eine Überdeckung des durch den mindestens einen Durchlassbereich der heruntergeschwenkten Seitenwand führenden Messtrahlengangs bzw. Messstrahls durch ein abrutschendes Fördergut zu detektieren.

Das heisst, die Sensoreinrichtung detektiert insbesondere eine mindestens teilweise, und insbesondere temporäre Überdeckung des mindestens einen Durchlassbereichs durch das von der Förderschale über die heruntergeschwenkte Seitenwand zur Abgabestation bzw. Übernahmeeinrichtung hin abrutschende Fördergut.

Es kann vorgesehen sein, dass die Sensoreinrichtung mehrere Sensoreinheiten enthält, deren Messstrahlengänge in Förderrichtung nacheinander, insbesondere hintereinander in Reihe angeordnet sind. Eine solche Anordnung gewährleistet insbesondere die Erfassung von kleineren Fördergüter, welche an der Abgabestation von der Förderschale abrutschen.

Es kann vorgesehen sein, dass die Sensoreinrichtung mehrere Sensoreinheiten enthält, deren Messstrahlengänge quer zur Förderrichtung bzw. in Abgaberichtung nacheinander sowie insbesondere in Förderrichtung zueinander versetzt angeordnet sind. Eine solche Anordnung gewährleistet die Erfassung des Abrutschverhaltens, wie Abrutschgeschwindigkeit, des von der Förderschale abrutschenden Förderguts. So kann zum Beispiel aus der Zeitdifferenz zwischen dem Detektieren des Fördergutes durch zwei nacheinander angeordnete Sensoreinheiten die Abrutschgeschwindigkeit des Fördergutes ermittelt werden.

Dank der Sensoreinrichtung kann mit einfachen Mitteln detektiert werden, ob ein Fördergut von einer Förderschale abgerutscht und der Übernahmeeinrichtung zugefördert wurde.

In einer Weiterbildung kann die Sensoreinrichtung mindestens eine Kontrollsensoreinheit umfassen. Die Kontrollsensoreinheit dient der Überprüfung, ob ein Fördergut vollständig von der Förderschale abgerutscht ist. Es kann nämlich vorkommen, dass sich Fördergüter beim Abrutschen verkanten und hängenbleiben, also nicht vollständig abrutschen. Die Kontrollsensoreinheit soll nun solche hängengebliebene bzw. nicht vollständig abgerutschte Fördergüter detektieren.

Die Kontrollsensoreinheit ist hierzu an einer Stelle an der Abgabestation entlang der Förderbahn des Schalenförderers angeordnet, an welcher die Fördergüter jeweils bereits vollständig von der Förderschale abgerutscht sind. Diese Stelle ist z. B. insbesondere ausgangs der Abgabestation. Alternativ kann auch eine Kontrollsensoreinheit für mehrere Abgabestationen vorgesehen sein. In diesem Fall kann die Kontrollsensoreinheit z. B. ausgangs einer Abgabezone entlang der Förderbahn des Schalenförderers angeordnet sein, in welcher die Abgabestationen angeordnet sind.

Im Normalbetrieb detektiert die Kontrollsensoreinheit keine Fördergüter, da diese bereits abgegeben bzw. von der Förderschale abgerutscht sind, wenn die Förderschale den Messstrahlengang der Kontrollsensoreinheit passiert. Detektiert die Kontrollsensoreinheit jedoch ein Fördergut, so handelt es sich um ein hängengebliebenes Fördergut. Mittels der Steuerungseinrichtung können nun nach Detektieren eines hängengebliebenen Fördergutes Massnahmen eingeleitet werden, wie Stoppen des Schalenförderers oder Benachrichtigung des Bedienpersonals, z. B. mittels optischer oder akustischer Anzeige.

Die Kontrollsensoreinheit kann gleich aufgebaut sein, wie die oben beschriebene mindestens eine Sensoreinheit der Sensoreinrichtung.

Der Messstrahlengang der Kontrollsensoreinheit ist insbesondere - analog zur mindestens einen Sensoreinheit der Sensoreinrichtung - in einem definierten Messintervall durch den mindestens einen Durchlassbereich der heruntergeschwenkten Seitenwand der Förderschale gerichtet. Es ist allerdings auch denkbar, dass der Messstrahlengang der Kontrollsensoreinheit in einem definierten Messintervall durch mindestens einen Durchlassbereich des Förderschalenbodens gerichtet ist.

Die Kontrollsensoreinheit ist entsprechend analog zur mindestens einen Sensoreinheit der Sensoreinrichtung dazu ausgelegt, eine Überdeckung des durch den mindestens einen Durchlassbereich gerichteten Messstrahlengangs bzw. Messstrahls durch ein Fördergut zu detektieren.

Die Fördergüter enthalten insbesondere Informationsträger, wie z. B. Etiketten mit Strichcodes, QR-Codes, Zahlencodes, Zieladressen oder RFID-Etiketten. Die Informationsträger an den Fördergütern werden in der Regel stromaufwärts vor den Abgabestationen an einer Erfassungsstation ausgelesen.

Überdies wird in der Regel der Fördertakt der mit den Fördergütern beschickten Förderschalen durch die Steuerungseinrichtung verfolgt. Dies erlaubt die Nachverfolgung der Förderung der Fördergüter entlang der Förderbahn des Schalenförderers. Die Steuerungseinrichtung ist insbesondere in der Lage zu ermitteln, welches Fördergut, in welcher Förderschale gefördert wird und wo sich die Förderschale zu einem bestimmten Zeitpunkt während der Förderung befindet.

Die Steuerungseinrichtung ist insbesondere auch in der Lage, allein durch das erfindungsgemässe Detektieren der Abgabe eines Fördergutes von einer Förderschale, das an der betreffenden Abgabestation abgegebene Fördergut zu identifizieren.

Diese Information ist z. B. von Bedeutung, wenn ein Fördergut durch Kippen der Förderschale und Herunterschwenken der Seitenwand an einer Abgabestation zur Abgabe freigegeben wird, jedoch aufgrund erhöhter Haftreibung oder durch Festsitzen bzw. Verkanten auf der Förderschale nicht abrutscht und daher weitergefördert wird. Durch die Information, dass ein Fördergut z. B. nicht abgegeben wurde, kann die Steuerungseinrichtung das betreffende Fördergut trotz fehlgeschlagener Abgabe korrekt weiterverfolgen.

Gemäss einer weiteren Ausführungsform der Erfindung entspricht das mindestens eine Förderschalenelement dem Förderschalenboden der Förderschale.

Die Sensoreinrichtung ist dazu ausgelegt, eine wenigstens teilweise Überdeckung des mindestens einen Durchlassbereich im Förderschalenboden durch ein auf der Förderschale liegendes Fördergut zu detektieren.

Die Sensoreinrichtung ist insbesondere dazu ausgelegt, eine Überdeckung des durch den mindestens einen Durchlassbereich im Förderschalenboden gerichteten Messstrahlengangs bzw. Messstrahls durch ein auf der Förderschale liegendes Fördergut zu detektieren.

Der Messtrahlengang bzw. der Messstrahl ist hierbei während des Messintervalls insbesondere von unten durch den Durchlassbereich gerichtet. Die Sensoreinrichtung bzw. die mindestens eine Sensoreinheit ist dabei insbesondere unterhalb der sich vorbeibewegenden Förderschale angeordnet. Der Messstrahlengang verläuft insbesondere parallel zur Flächennormalen des Förderschalenbodens.

Es kann vorgesehen sein, dass die Sensoreinrichtung mehrere Sensoreinheiten enthält, deren Messstrahlengänge quer zur Förderrichtung nacheinander, insbesondere hintereinander in Reihe angeordnet sind. Eine solche Anordnung gewährleistet insbesondere die Erfassung von kleineren Fördergüter, welche auf der Förderschale angeordnet sind.

Es ist denkbar, dass die Förderanlage gemäss dieser Ausführungsform mindestens eine, insbesondere eine Mehrzahl von entlang der Förderbahn angeordnete Abgabestationen) zur Abgabe eines Fördergutes von der Förderschale an eine Übemahmeeinrichtung aufweist.

Die Sensoreinrichtung bzw. die mindestens eine Sensoreinheit ist in diesem Fall derart angeordnet, dass der Messstrahlengang der Sensoreinrichtung an der Abgabestation in einem definierten Messintervall durch den mindestens einen Durchlassbereich des Förderschalenbodens gerichtet ist.

Der Messtrahlengang bzw. der Messstrahl ist hierbei während des Messintervalls von unten durch den Durchlassbereich, wie Durchbruch gerichtet. Entsprechend ist die Sensoreinrichtung bzw. die mindestens eine Sensoreinheit an der Abgabestation unterhalb des Förderschalenbodens angeordnet.

Die Sensoreinrichtung ist nun dazu ausgelegt, an der Abgabestation eine Überdeckung bzw. eine fehlende Überdeckung des durch den mindestens einen Durchlassbereich im Förderschalenboden gerichteten Messstrahlengangs bzw. Messstrahls zu detektieren. Das heisst die Sensoreinrichtung detektiert, ob insbesondere an der Abgabestation ein Fördergut dem Förderschalenboden aufliegt oder nicht.

Aus dieser Information lässt sich zum Beispiel ableiten, ob das Fördergut abgegeben wurde oder nicht. Das Messintervall erfolgt entsprechend im Anschluss an ein Abgabezeitfenster. Das Messintervall kann z. B. immer noch bei geneigter bzw. gekippter Förderschale erfolgen. Das Messintervall kann z. B. im Anschluss an die bzw. nach Passieren der mindestens eine Abgabestation erfolgen. Die Sensoreinrichtung bzw. die mindestens eine Sensoreinheit ist entsprechend stromabwärts von der mindestens einen Abgabestation angeordnet.

So sind insbesondere in den beiden einander gegenüber liegenden, jeweils zu einer Abgabeseite hin angeordneten Randbereichen des Förderschalenbodens Durchlassbereiche angeordnet. Da die Fördergüter bei der Einnahme der Kippstellung der Kippschale in Abhängigkeit von der Kipprichtung zu einer der beiden Seitenwände hin rutschen, werden die randseitigen Durchlassbereiche wenigstens teilweise vom Fördergut überdeckt und während der Abgabe entsprechend auch detektiert.

Grundsätzlich kann ein Messintervall vor, während und/oder nach Abgabe des Fördergutes bzw. im Anschluss an das Abgabezeitfenster oder sogar im Anschluss an die Abgabezone erfolgen.

Es kann vorgesehen sein, dass die Sensoreinrichtung mehrere Sensoreinheiten enthält, deren Messstrahlengänge in Förderrichtung nacheinander, insbesondere hintereinander in Reihe angeordnet sind. Eine solche Anordnung gewährleistet insbesondere die Erfassung von kleineren Fördergüter auf dem Förderschalenboden.

Es kann vorgesehen sein, dass die Sensoreinrichtung mehrere Sensoreinheiten enthält, deren Messstrahlengänge quer zur Förderrichtung bzw. in Abgaberichtung nacheinander sowie insbesondere in Förderrichtung versetzt zueinander angeordnet sind.

Eine solche Anordnung gewährleistet die Erfassung des Abrutschverhaltens, wie Abrutschgeschwindigkeit, des von der Förderschale abrutschenden Förderguts. So kann zum Beispiel aus der Zeitdifferenz zwischen dem Detektieren des Fördergutes durch zwei nacheinander angeordnete Sensoreinheiten die Abrutschgeschwindigkeit des Fördergutes vom Förderschalenboden ermittelt werden.

Es ist auch denkbar, mit der Sensoreinrichtung lediglich die Präsenz eines Fördergutes auf der Förderschale zu detektieren. In diesem Fall kann die Sensoreinrichtung bzw. die mindestens eine Sensoreinheit stromabwärts von der Beladezone und insbesondere vor der Abgabezone angeordnet sein.

Betreffend Identifizierung der abgegebenen Fördergüter durch die Steuerungseinrichtung treffen auch hier die im Zusammenhang mit der schwenkbaren Seitenwand weiter oben getroffenen Aussagen zu.

Gemäss einer weiteren Ausführungsform der Erfindung entspricht das mindestens eine Förderschalenelement einem Abdeckelement einer Abdeckvorrichtung zum wenigstens teilweisen Überdecken eines Zwischenraums zwischen zwei entlang der Förderbahn benachbarten Förderschalen. Das Abdeckelement ist insbesondere plattenartig bzw. als Plattenelement ausgebildet.

Zwei in Förderrichtung aufeinanderfolgende Förderschalen sind in der Regel jeweils voneinander beabstandet. Das heisst, zwischen zwei in Förderrichtung aufeinanderfolgende Förderschalen wird in der Regel jeweils ein Zwischenraum ausgebildet.

Dieser Zwischenraum wird nun gemäss dieser Ausführungsform wenigstens teilweise und insbesondere vollständig durch eine Abdeckvorrichtung bzw. durch mindestens ein Abdeckelement der Abdeckvorrichtung überdeckt. Eine solche Abdeckvorrichtung wird beispielsweise in der Schweizer Patentanmeldung CH000324/2022 offenbart.

Die Abdeckvorrichtung kann insbesondere dazu ausgelegt sein, die Relativbewegungen der Förderschalen bei Aufrechterhaltung einer wenigstens teilweisen und insbesondere vollständigen Überdeckung des Zwischenraumes zwischen zwei benachbarten Förderelementen aufzunehmen. Solche Relativbewegungen treten beispielsweise bei einer Richtungsänderung der Förderbahn auf.

Die Abdeckvorrichtung kann aus mehreren Teilen bestehen und insbesondere neben dem mindestens einen Abdeckelement noch mindestens ein weiteres Element, z. B. ein weiteres Abdeckelement umfassen. Die Teile, insbesondere zwei oder mehr als zwei Abdeckelemente können gelenkig miteinander verbunden sein.

Die Abdeckvorrichtung kann an einer in Förderrichtung betrachtet vorderen Begrenzungswand der Förderschale angebracht, insbesondere angelenkt sein. Die Abdeckvorrichtung kann an einer in Förderrichtung betrachtet hinteren Begrenzungswand der Förderschale angebracht, insbesondere angelenkt sein.

Die Sensoreinrichtung ist dazu ausgelegt, eine Überdeckung des mindestens einen Durchlassbereich im Abdeckelement durch ein zwischen zwei Förderschalen über dem Abdeckelement, fehlplatziertes Fördergut oder Fremdobjekt zu detektieren.

Die Sensoreinrichtung ist insbesondere dazu ausgelegt, eine Überdeckung des durch den mindestens einen Durchlassbereich im Abdeckelement führenden Messstrahlengangs bzw. Messstrahls durch ein zwischen zwei Förderschalen über dem Abdeckelement, fehlplatziertes Fördergut oder Fremdobjekt zu detektieren.

Ein Fremdobjekt kann z. B. ein Maschinenteil sein, welches unbeabsichtigt in den Förderbereich der Förderanlage gelangt.

Der Messtrahlengang bzw. der Messstrahl ist hierbei während des Messintervalls insbesondere von unten durch den mindestens einen Durchlassbereich gerichtet. Die Sensoreinrichtung bzw. die mindestens eine Sensoreinheit ist dabei insbesondere unterhalb der sich vorbeibewegenden Abdeckvorrichtung angeordnet. Der Messstrahlengang verläuft insbesondere parallel zur Flächennormalen des Abdeckelements.

Die Sensoreinrichtung bzw. die mindestens eine Sensoreinheit ist insbesondere stromabwärts nach der Beladezone angeordnet. Die Sensoreinrichtung bzw. die mindestens eine Sensoreinheit ist insbesondere stromaufwärts vor der Abgabezone angeordnet. Dies erlaubt die Entfernung von fehlplatzierten Fördergütern bzw. Fremdobjekten vor dem Kippen bzw. der Schrägstellung der Kippschalen und vor der Förderung der Fördergüter durch die Abgabezone.

Wird ein fehlplatziertes Fördergut oder Fremdobjekt detektiert, so kann z. B. die Förderanlage angehalten und das fehlplatziertes Fördergut oder Fremdobjekt durch das Bedienpersonal entfernt werden. Dadurch kann eine Beschädigung der Förderanlage verhindert werden, wie sie z. B. beim unkontrollierten Herunterfallen des fehlplatzierten Förderguts oder Fremdobjekts von der Kippschale verursacht werden kann.

Es kann vorgesehen sein, dass die Sensoreinrichtung mehrere Sensoreinheiten enthält, deren Messstrahlengänge quer zur Förderrichtung hintereinander und insbesondere in Reihe angeordnet sind. Eine solche Anordnung gewährleistet insbesondere die Erfassung von kleineren Fördergüter oder Fremdobjekten, welche dem mindestens einen Abdeckelement aufliegen bzw. dieses überdecken.

Einzelne oder sämtliche der oben genannten Ausführungsformen können auch in Kombination miteinander in der Förderanlage umgesetzt sein.

Die Erfindung betrifft des Weiteren auch ein Verfahren zum Detektieren von Fördergütern, welche mittels einer erfindungsgemässen Förderanlage, wie oben beschrieben, gefördert werden.

Das Verfahren zeichnet sich dadurch aus, dass der Messstrahl der Sensoreinrichtung in einem definierten Messintervall durch den mindestens einen Durchlassbereich des mindestens einen Förderschalenelements gerichtet ist und eine wenigstens teilweise Überdeckung des Durchlassbereichs bzw. eine Überdeckung des Messstrahls durch ein Fördergut detektiert.

Soll das Abrutschen eines Fördergutes an einer Abgabestation detektiert werden, so wird die mit dem Fördergut beladene Förderschale in Kippstellung entlang der Abgabestationen bewegt, wobei zwecks Abgabe des Fördergutes die abgabenseitige Seitenwand auf Höhe der entsprechenden Abgabestation von einer Rückhalteposition in eine Abgabeposition heruntergeschwenkt wird.

Mittels der Sensoreinrichtung wird nun ermittelt, ob ein Fördergut an der Abgabestation über die heruntergeschwenkte Seitenwand von der Förderschale zur Übernahmeeinrichtung hin abrutscht, also abgegeben wird.

Dies geschieht durch Aussenden eines in einem definierten Messintervall den mindestens einen Durchlassbereich der heruntergeschwenkten Seitenwand passierenden Messtrahls. Liegt zum Messzeitpunkt ein Fördergut über dem mindestens einen Durchlassbereich, so wird der Messstrahl wenigstens teilweise reflektiert. Der wenigstens teilweise reflektierte Messstrahl wird von einem Empfänger empfangen und ausgewertet.

Das genannte Messintervall erfolgt synchron zur Bewegung des mindestens einen Durchlassbereichs durch den Messstrahlengang der Sensoreinrichtung bzw. der mindestens einen Sensoreinheit. Das heisst, das genannte Messintervall ist auf die Förderbewegung der Förderschalen bzw. den Fördertakt der Förderschalen entlang der Förderbahn abgestimmt.

Dasselbe trifft auch auf jene Ausführungsformen zu, bei welchen das Förderschalenelement mit dem mindestens einen Durchlassbereich dem Förderschalenboden oder einem Abdeckelement einer Abdeckvorrichtung entspricht.

Der erfindungsgemässe Sortierförderer zeichnet sich durch folgende Vorteile auf:
- die Abgabe der Fördergüter an der Abgabestationen kann durch technisch einfache und entsprechend kostengünstige Sensormittel detektiert werden;
- die Sensormittel sind robust und langlebig und wenig störungsanfällig;
- Die Sensormittel erlauben eine einfache Auswertung der Messsignale;
- das Verfahren zum Detektieren der Abgabe ist einfach und daher wenig störungsanfällig;
- da die Fördergüter in der Regel über Informationsträger einmalig identifiziert und der Fördertakt der die Fördergüter fördernden Förderschalen durch die Steuerungseinrichtung verfolgt wird, können auch mit dem erfindungsgemässen Verfahren die an definierten Abgabestationen abgegebenen Fördergüter identifiziert werden.

Im Folgenden wird der Erfindungsgegenstand anhand von bevorzugten Ausführungsbeispielen, welche in den beiliegenden Figuren dargestellt sind, näher erläutert. Es zeigen jeweils schematisch:
- Figur 1:: eine Draufsicht eines Sortierförderers;
- Figur 2:: eine perspektivische Ansicht einer Fördereinheit;
- Figur 3:: eine Ansicht einer Sortieranlage nach Figur 1 in Förderrichtung aus dem Bereich der Abgabestationen mit zwei Fördereinheiten jeweils in einer ersten und zweiten Kippstellung gemäss einer Ausführungsform;
- Figur 4:: eine Ansicht einer Sortieranlage nach Figur 1 in Förderrichtung aus dem Bereich der Abgabestationen mit zwei Fördereinheiten jeweils in einer ersten und zweiten Kippstellung gemäss einer weiteren Ausfiihrungsform;
- Figur 5a:: eine Seitenansicht von zwei Förderschalen einer weiteren Ausführungsform;
- Figur 5b:: eine Draufsicht der zwei Förderschalen nach Figur 5a;
- Figur 6:: eine perspektivische Ansicht eines Ausschnittes einer weiteren Ausführungsform einer Fördereinheit;
- Figur 7:: eine perspektivische Ansicht eines Ausschnittes einer weiteren Ausfuhrungsform einer Fördereinheit.

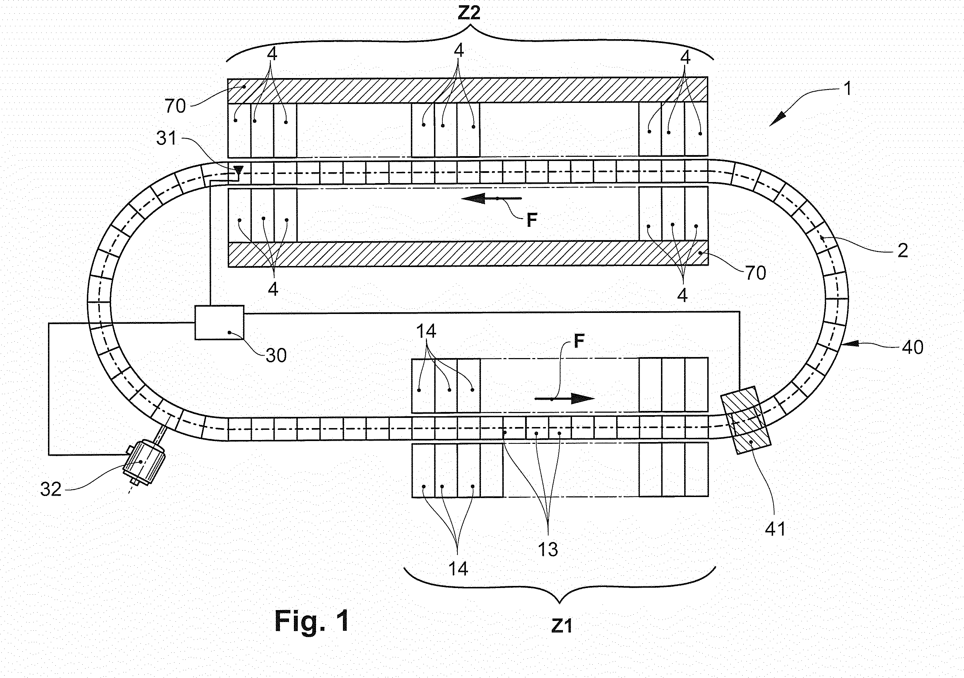

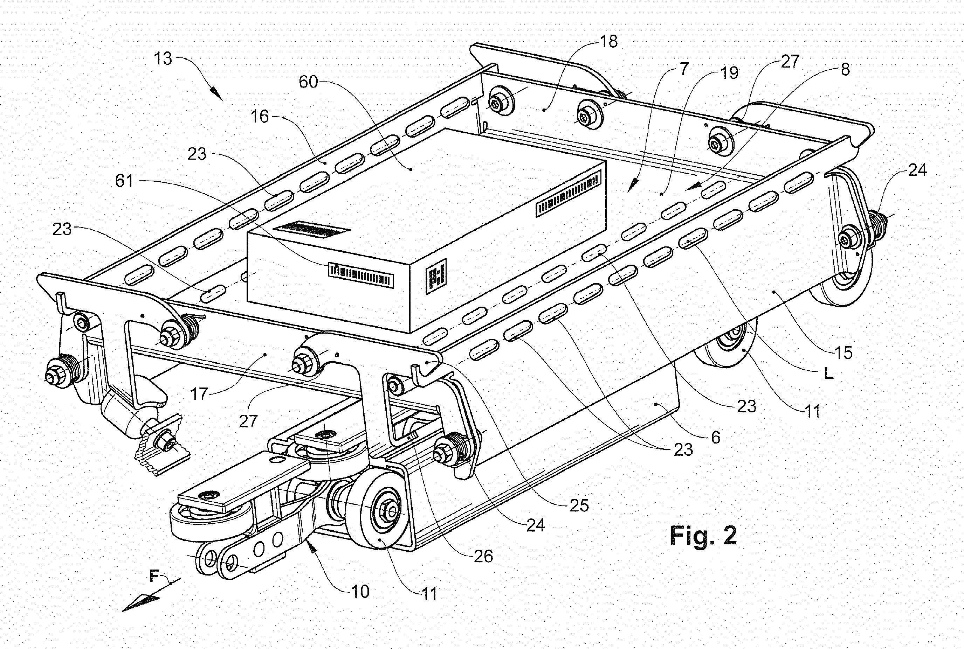

Die **Figur 1** zeigt eine schematische Darstellung eines Sortierförderers 1. Der Sortierförderer 1 bildet eine geschlossene Förderbahn 2 aus, entlang welcher mit Fördergütern 60 beladbare Fördereinheiten 13 mit Kippschalen 7 bewegbar sind (siehe auch Figur 2).

Der Sortierförderer 1 bildet eine Beladezone Z1 aus. Die Beladezone Z1 definiert einen Förderbahnabschnitt, entlang welchem die Fördereinheiten 13 über eine oder mehrere Beladestationen 14 mit Fördergütern 60 beladen werden.

Die mit Fördergütern 60 beladenen Fördereinheiten 13 werden in Förderrichtung F an einer Erfassungsstation 41 vorbei gefördert, an welcher zwecks Identifizierung des Fördergutes 60 ein Informationsträger 61 am Fördergut 60 ausgelesen wird. Die Daten werden an eine Steuerungseinrichtung 30 übermittelt. Die Fördereinheiten 13 werden im Anschluss an die Erfassungsstation 41 in eine Abgabezone Z2 weitergefördert, in welcher die Fördergüter 60 an Abgabestationen 4, welche entlang der Förderbahn 2 aufeinanderfolgend angeordneten sind, von den Fördereinheiten 13 an eine Übernahmeeinrichtung 70 abgegeben werden.

Der Sortierförderer 1 enthält in der Abgabezone Z2 beidseitig von der Förderbahn 2 angeordnete Abgabestationen 4. Dies erlaubt die Abgabe der Fördergüter 60 zu zwei Abgabeseiten hin.

Die Kippschalen 7 der Fördereinheiten 13 werden hierzu in Kippstellung durch die Abgabezone Z2 bewegt. Durch die Einnahme einer Kippstellung der Kippschalen 7 beim Einlaufen in die Abgabezone Z2 ist bereits vorbestimmt, auf welche Abgabeseite das Fördergut 60 abgeben wird.

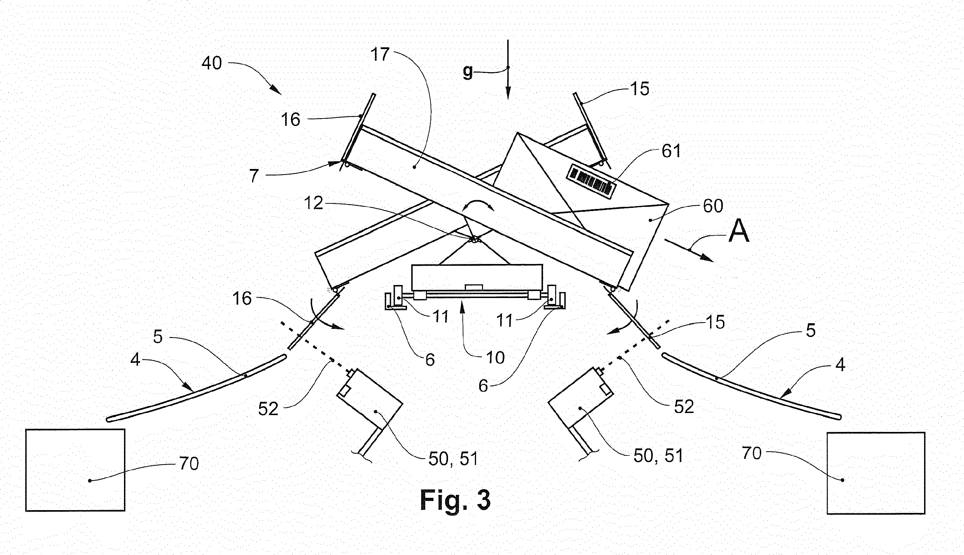

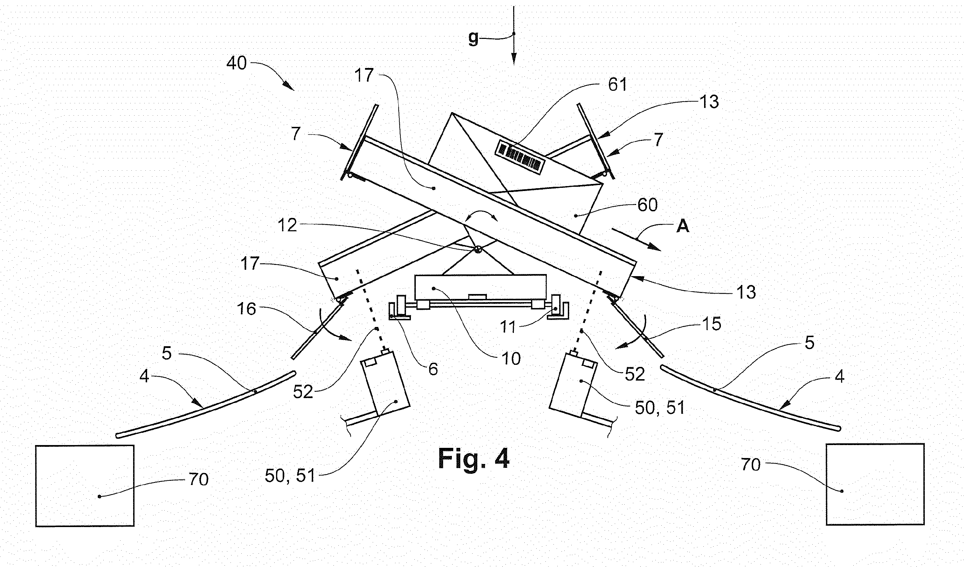

Da sich die Kippschale 60 entlang der Abgabezone Z2 in der Kippstellung befindet, muss zur Abgabe des Fördergutes 60 beim Passieren der betreffenden Abgabestation 4 lediglich die abgabeseitige Seitenwand 15, 16 der Kippschale 7 von einer Rückhalteposition in eine Abgabeposition heruntergeschwenkt werden (siehe auch Figur 3 und 4). Dies erfolgt zum Beispiel über ein jeder Abgabestation 4 zugeordnetes Steuerorgan 31. Der Übersicht halber ist in der Figur 1 lediglich ein Steuerorgan 31 schematisch eingezeichnet. Das Steuerorgan 31 kann ein Schaltelement sein, welches einen Verriegelungsmechanismus (siehe auch Figur 3 und 4) zur Verriegelung der Seitenwand 15, 16 löst. Das Steuerorgan 31 wird über die Steuerungseinrichtung 30 gesteuert.

Sobald die entsprechende Seitenwand 15, 16 in die Abgabeposition heruntergeschwenkt ist, kann das Fördergut 60 von der geneigten Kippschale 7 zur Abgabestation 4 hin abrutschen.

Das Fördergut 60 wird an der Abgabestation 4 von einer Übernahmeeinrichtung 70 übernommen. Nach Verlassen der Abgabezone Z2 wird die Kippschale 7 aus der Kippstellung wieder in die horizontale Förderstellung zurückbewegt.

Die Fördereinheiten 13 werden in der Folge wieder in die Beladezone Z1 hinein bewegt, wo diese erneut mit einem Fördergut 60 beladen werden. Damit beginnt ein neuer Förder- und Sortierzyklus.

Selbstverständlich können entlang der Förderbahn 2 des Sortierförderers 1, insbesondere zwischen der Beladezone und der Abgabezone noch weitere Stationen vorgesehen sein, wie z. B. eine Ausschleusstation zum Ausschleusen beschädigter oder fehlplatzierter Fördergüter 60 bzw. Fremdobjekte.

Der Sortierförderer 1 wird über einen Antrieb 32 angetrieben. Der Antrieb 32 wird über die Steuerungseinrichtung 30 gesteuert.

Die **Figur 2** zeigt eine Ausführungsform einer schienengeführten Fördereinheit 13, wie sie beispielsweise in einem Sortierförderer 1 gemäss Figur 1 eingesetzt werden kann.

Die Fördereinheit 13 umfasst eine kippbare Förderschale 7 sowie einen Laufwagen 10. Die Förderschale 7 ist über einen Kippmechanismus 12 (siehe Figur 3) auf dem Laufwagen 10 angeordnet und mit diesem verbunden.

Der Kippmechanismus 12 erlaubt das Kippen der Förderschale 7 relativ zum Laufwagen 10 zu einer ersten Kippseite hin in eine erste Kippstellung sowie auch zu einer der ersten Kippseite gegenüber liegenden zweiten Kippseite hin in eine zweite Kipp stellung.

Die Förderschale 7 enthält einen Förderschalenboden 19, welcher eine Auflagefläche für ein Fördergut 60 ausbildet. Der Förderschalenboden 19 ist von einer in Förderrichtung F betrachtet ersten linken und zweiten rechten Seitenwand 15, 16 sowie von einer in Förderrichtung F betrachtet vorderen und hinteren Begrenzungswand 17, 18 eingefasst. Die Seiten- und Begrenzungswände 15-18 bilden gemeinsam mit dem Förderschalenboden 19 einen Aufnahmeraum 8 für das Fördergut 60 aus. Überdies verhindern die Seiten- und Begrenzungswände ein Abrutschen des Förderguts 60 von der Auflagefläche.

Die Seitenwände 15, 16 sind entsprechend jeweils zu einer Kippseite hin angeordnet. Die Seitenwände 15, 16 sind zwischen einer Förderposition, in welcher diese ein Abrutschen des Fördergutes 60 von der Auflagefläche verhindern, in eine Abgabeposition, in welcher diese eine Abgabeöffnung zur Abgabe des Fördergutes 60 freigeben, schwenkbar (siehe Figur 3 und 4).

Die Seitenwände 15, 16 sind jeweils um eine Schwenkachse unabhängig voneinander schwenkbar gelagert. Die Seitenwände 15, 16 wirken jeweils mit einer in der Schwenkachse angeordneten, vorgespannten Drehfeder 24 zusammen, welche auf die Seitenwände 15, 16 eine Rückstellkraft in Richtung Abgabeposition ausübt.

Die Seitenwände 15, 16 werden in der Förderposition, das heisst wenn die Seitenwände 15, 16 hochgeschwenkt sind, durch einen Verriegelungsmechanismus 25 in der Schliessstellung gehalten. Zum Herunterschwenken der Seitenwände 15, 16 wird die Verrieglung des Verriegelungsmechanismus 25 gelöst, wodurch die Seitenwände 15, 16 aufgrund der Rückstellkraft der Drehfeder 24 selbsttätig in die Abgabeposition geschwenkt, das heisst nach unten geschwenkt werden.

Das Lösen der Verriegelung des Verriegelungsmechanismus 25 geschieht über das Steuerorgan 31, welches ein Betätigungselement 26 am Verriegelungsmechanismus 25 betätigt. Das Steuerorgan 31 ist über die Steuerungseinrichtung 30 zuschaltbar.

Der Verriegelungsmechanismus 25 ist über eine Drehgelenkverbindung mit der Förderschale 7 verbunden. Eine in der Drehachse angeordnete, vorgespannte Drehfeder 27 drückt den Verriegelungsmechanismus 25 selbsttätig in die Verriegelungsposition. Das Steuerorgan 31 bewegt nun bei Betätigung des Betätigungselements 26 den Verriegelungsmechanismus 25 entgegen der Rückstellkraft der Drehfeder 27 aus der Schliessstellung, so dass die Seitenwand 15, 16 herunterschwenken kann.

Die Seitenwände 15, 16 bilden in der Abgabeposition eine Rutschfläche für das Fördergut 60 aus.

Zum Hochschwenken der Seitenwände 15, 16 in die Förderposition werden diese über ein Steuerorgan (nicht gezeigt) entgegen der Rückstellkraft der Drehfeder 24 wieder hochgeklappt. Diese schnappen in der Folge in einer Raststellung am Verriegelungsmechanismus 25 ein.

Selbstverständlich sind auch andere technische Lösung zum Schwenken bzw. Verriegeln der Seitenwände 15, 16 zwischen der Förderposition und der Abgabeposition möglich.

Der Laufwagen 10 enthält Laufrollen 11, welche entlang von Führungsflächen in einem von einer Führungsschiene 6 ausgebildeten Führungskanal abrollen. Die Führungsschiene 6 ist relativ zu den Fördereinheiten 13 mittig angeordnet. Die Laufwagen 10 der Fördereinheiten 13 sind jeweils über eine Gelenkverbindung miteinander verbunden und bilden so eine Verkettung der Fördereinheiten 13.

Die Seitenwände 15, 16 enthalten jeweils eine Reihe von in Förderrichtung F betrachtet hintereinander in Reihe angeordneten Langlöchern 23. Ebenso enthält der Förderschalenboden 19 eine Reihe von in Förderrichtung F betrachtet hintereinander angeordneten Langlöchern 23. Die Funktion dieser Langlöcher 23 wird anhand der Figuren 3 und 4 näher erläutert.

Die **Figuren 3** **und** **4** zeigen Sortieranlagen 1 wie sie beispielsweise auch in Figur 1 dargestellt ist mit jeweils unterschiedlicher Anordnung der Sensoreinrichtung bzw. der Sensoreinheiten 50, 51. Die Ansicht ist in Förderrichtung F aus dem Bereich der Abgabestationen 4 und zeigt zwei Fördereinheiten 13 mit jeweils einer Kippschale 7, welche sich in einer ersten und entgegengesetzten zweiten Kippstellung zur linken und rechten Seite hin befinden.

Die Fördereinheiten 13 umfassen jeweils eine Förderschale bzw. Kippschale 7 sowie einen Laufwagen 10 mit Laufrollen 11. Die Förderschalen 7 sind jeweils über einen Kippmechanismus 12 mit dem Laufwagen 10 verbunden. Das Kippen der Förderschalen 7 erfolgt beispielsweise über eine hier nicht dargestellte Kulissenführung, welche mit einem Kontaktorgan an der Förderschale 7 oder dem Kippmechanismus 12 in Kontakt kommt.

Der Laufwagen 10 und somit die Fördereinheit 13 läuft über die Laufrollen 11 entlang einer Führungsschiene 6 ab. Die Führungsschiene 6 gibt entsprechend die Förderbahn 2 der Fördereinheiten 13 vor.

Die beiden dargestellten Fördereinheiten 13 sind hintereinander angeordnet und befinden sich auf Höhe einer auf der linken bzw. rechten Seite angeordneten Abgabestation 4. Entsprechend sind die Förderschalen 7 der Fördereinheiten 13 in Förderrichtung F zur linken bzw. rechten Seite gekippt.

Die Abgabestationen 4 umfassen jeweils ein geneigtes Abgleitelement 5, welches für das abzugebende Fördergut 60 eine Abgleitfläche ausbildet. Die der Abgabestation 4 jeweils zugewandte Seitenwand 15, 16 ist entsprechend zum Abgleitelement 5 hin heruntergeschwenkt und bildet mit seiner inneren Wandfläche selbst eine Abrutschfläche aus, an welche die Abgleit- bzw. Abrutschfläche des Abgleitelements 5 anschliesst.

Das Fördergut 60 rutscht nun an der Abgabestation 4 mit Schwerkraftunterstützung von der geneigten Förderschale 7 über die herunterschwenkte Seitenwand 15, 16 auf die Abgleitfläche des Abgleitelements 5.

Die Seitenwände 15, 16 weisen nun Durchbrüche 23 auf, wie sie beispielsweise in Figur 2 gezeigt sind.

Unterhalb der Förderschale 7 bzw. unterhalb der heruntergeschwenkten Seitenwand 15, 16 ist eine optoelektronische Sensoreinheit 51 einer Sensoreinrichtung 50 angeordnet. Der Messstrahl bzw. dessen Messstrahlengang 52 führt in einem definierten Messintervall während eines Abgabezeitfensters durch einen Durchbruch 23 der heruntergeschwenkten Seitenwand 15, 16.

Das Messintervall ist über die Steuerungseinrichtung 30 mit der Bewegung der Förderschalen 7 bzw. des mindestens einen Durchbruchs 23 entlang der Förderbahn 2 getaktet bzw. synchronisiert, derart dass der Messvorgang dann erfolgt, wenn der Messstrahlengang 52 bzw. Messstrahl der Sensoreinrichtung 50 bzw. der Sensoreinheit 51 durch den sich in Förderrichtung F vorbei bewegenden Durchbruch 23 der heruntergeschwenkten Seitenwand 15, 16 gerichtet ist. Die Dauer des Messintervalls ist insbesondere auf die Zeitspanne abgestimmt, in welcher der Messstrahlengang 52 durch den sich mit Fördergeschwindigkeit vorbeibewegenden Durchbruch 23 gerichtet ist. Bei einem in Förderrichtung F ausgerichteten Langloch 23 ist diese Zeitspanne länger als zum Beispiel bei einem Rundloch.

Die optoelektronische Sensoreinheit 51 ist ein Reflexions-Lichttaster. Überdeckt nun das abrutschende Fördergut 60 den Durchbruch 23 bzw. den Messstrahl 52, so wird der vom Sender der Sensoreinheit 51 emittierte Messstrahl 52, wie z. B. Laserstrahl, vom Fördergut 60 wenigstens teilweise durch den Durchbruch 23 hindurch reflektiert und vom Empfänger der Sensoreinheit 51 empfangen. Daraus wird die Information abgeleitet, dass das Fördergut 60 an der Abgabestation 4 abgegeben wurde.

Wird der Durchbruch 23 bzw. Messstrahl 52 dahingegen nicht vom Fördergut 60 überdeckt, so wird der durch den Durchbruch gerichtete Messstrahl 52 nicht reflektiert.

Daraus wird die Information abgeleitet, dass kein Fördergut 60 an der Abgabestation 4 abgegeben wurde.

Gemäss der Figur 2 sind in der Seitenwand 15, 16 eine Mehrzahl von in Förderrichtung F hintereinander in Reihe angeordnete Langlöcher 23 angeordnet. Die Steuerungseinrichtung 30 kann nun so ausgelegt sein, dass zu jedem Durchbruch 23, welcher durch den ortsfesten Messstrahlengang 52 bewegt wird, ein Messintervall ausgelöst wird. Somit gibt es während des Abgabezeitfensters mehrere Messintervalle nacheinander. Dadurch kann die Abgabe des Fördergutes 60 über die Dauer des Abgabezeitfensters mit der Sensoreinrichtung 50 überwacht werden.

Gemäss der Ausführungsform nach Figur 4 weist der Förderschalenboden 19 an seinen zu den Abgabeseiten hin weisenden seitlichen Randbereichen Durchbrüche 23 auf, wie sie beispielsweise in Figur 2 gezeigt sind. Diese seitlichen Randbereiche werden in der Regel während der Förderung nicht vom Fördergut 60 überdeckt, sondern erst bei der Abgabe des Fördergutes 60.

Unterhalb der Förderschale 7 ist eine optoelektronische Sensoreinheit 51 einer Sensoreinrichtung 50 angeordnet. Der Messstrahl bzw. dessen Messstrahlengang 52 führt in einem definierten Messintervall zum Abgabezeitpunkt durch ein Durchbruch 23 im Förderschalenboden 19.

Das Messintervall ist über die Steuerungseinrichtung 30 mit der Bewegung der Förderschalen 7 bzw. des Durchbruchs 23 entlang der Förderbahn 2 getaktet bzw. synchronisiert, so dass der Messvorgang dann erfolgt, wenn sich der Durchbruch 23 im Förderschalenboden 19 durch den Messstrahlengang 52 der Sensoreinrichtung 50 bzw. der Sensoreinheit 51 bewegt. Die Dauer des Messintervalls ist insbesondere auf die Zeitspanne abgestimmt, in welcher der Messstrahlengang 52 durch den sich mit Fördergeschwindigkeit vorbeibewegenden Durchbruch 23 gerichtet ist. Bei einem in Förderrichtung F ausgerichteten Langloch 23 ist diese Zeitspanne länger als z. B. bei einem Rundloch.

Die optoelektronische Sensoreinheit 51 ist ein Reflexions-Lichttaster. Überdeckt nun das abrutschende Fördergut 60 den Durchbruch 23 bzw. den Messstrahl 52, so wird der vom Sender der Sensoreinheit 51 emittierte Messstrahl 52, wie z. B. Laserstrahl, vom Fördergut 60 wenigstens teilweise durch den Durchbruch 23 hindurch reflektiert und von einem Empfänger der Sensoreinheit 51 empfangen. Daraus wird die Information abgeleitet, dass das Fördergut 60 an der Abgabestation 4 abgegeben wurde.

Wird der Durchbruch 23 bzw. Messstrahl 52 dahingegen nicht vom Fördergut 60 überdeckt, so wird der durch den Durchbruch 23 gerichtete Messstrahl 52 nicht reflektiert. Daraus wird die Information abgeleitet, dass kein Fördergut 60 an der Abgabestation 4 abgegeben worden ist.

Gemäss der Figur 2 sind im Förderschalenboden 19 eine Mehrzahl von in Förderrichtung F hintereinander in Reihe angeordnete Langlöcher 23 angeordnet. Die Steuerungseinrichtung 30 kann nun so ausgelegt sein, dass zu jedem Durchbruch 23, welcher durch den Messstrahlengang 52 bewegt wird, ein Messintervall ausgelöst wird. Somit gibt es während des Abgabezeitfensters mehrere Messintervalle nacheinander. Dadurch kann die Abgabe des Fördergutes 60 über die Dauer des Abgabezeitfensters mit der Sensoreinrichtung 50 überwacht werden.

Alternativ können die Durchbrüche 23 auch in einem zentralen Bereich des Förderschalenbodens 19 angeordnet sein. In diesem Fall würde eine fehlende Überdeckung der Durchbrüche 23 auf eine Abgabe des Fördergutes 60 hinweisen, während eine Überdeckung der Durchbrüche 23 auf eine fehlende Abgabe hinweisen würde. Die Sensoreinheit 51 wäre in diesem Fall entlang der Förderbahn 2 eher gegen Ende der Abgabestation 4 oder im Anschluss an diese angeordnet.

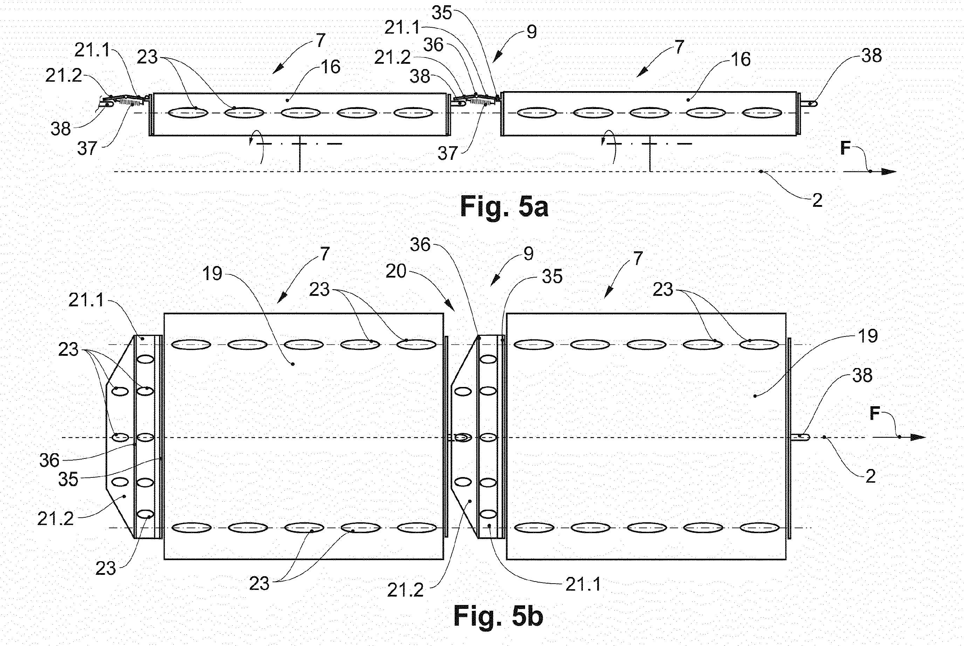

Die Figuren 5a und 5b zeigen Förderschalen 7 mit einer Abdeckvorrichtung 20 zum Überdecken des Zwischenraums 9 zwischen zwei aufeinanderfolgenden Förderschalen 7.

Die Abdeckvorrichtung 20 ist mehrteilig ausgebildet und umfasst ein erstes und zweites Abdeckplattenelement 21.1, 21.2, welche über ein Gelenk 35 mit der hinteren Begrenzungswand 18 der Förderschale 7 gelenkig verbunden sind. Das zweite Abdeckplattenelement 21.2 ist über ein weiteres Gelenk 36 mit dem ersten Abdeckplattenelement 21.1 verbunden. Die Abdeckvorrichtung 20 stützt sich auf einem Auflagedom 38 ab, auf dem das zweite Abdeckplattenelement 21.2 beweglich ruht. Der Auflagedom 38 ist an der vorderen Begrenzungswand 17 der nachlaufenden Förderschale 7 angeordnet.

Die Abdeckelemente 21.1, 21.2 können alternativ auch mit der vorderen Begrenzungswand 17 gelenkig verbunden sein und der Auflagedom 38 kann an der hinteren Begrenzungswand 18 angeordnet sein.

Die beiden ersten und zweiten Abdeckplattenelemente 21.1, 21.2 sind im Weiteren über eine unterhalb der Plattenelemente angeordnete Rückstellfeder 37 gelenkübergreifend miteinander verbunden. Die Rückstellfeder 37 übt eine Rückstellkraft auf die beiden Plattenelemente 21.1, 21.2 aus, welche ein Niederhalten der Abdeckplattenelemente 21.1, 21.2 bewirkt.

Bei Relativbewegungen zweier aufeinander folgender Fördereinheiten, kann die Abdeckvorrichtung 20 sich auf dem Auflagedom 38 gleitend bewegen, oder aber sich rollend auf dem Auflagedom 38 abwälzen. Der Auflagedom 38 dient der Abdeckvorrichtung 20 als Auflager zum beweglichen Abstützen. Überdies lassen sich die Abdeckplattenelemente 21.1, 21.2 bei Verkleinerung des Zwischenraums 9, z. B. bei Kurvenbahnen, über das Gelenk 36 zusammenklappen bzw. -stauchen.

Die beiden Abdeckplattenelemente 21.1, 21.2 enthalten nun Durchbrüche 23, durch welche in analoger Weise wie in den Ausfiihrungsbeispielen zu Figur 3 und 4 in einem definierten Messintervall der Messstrahlengang 52 einer unterhalb der Förderschalen 7 bzw. Fördereinheiten 13 angeordneten Sensoreinheit 51 gerichtet ist.

Wird die Abdeckvorrichtung 20 bzw. werden deren Abdeckplattenelemente 21.1, 21.2 durch ein fehlplatziertes Fördergut 60 oder ein Fremdobjekt überdeckt, so wird dies von der Sensoreinheit 51 entsprechend registriert, indem der Empfänger der Sensoreinheit 51 den wenigstens teilweise am Fördergut 60 oder einem Fremdobjekt reflektierten Messstrahl empfängt.

Wird ein die Abdeckvorrichtung 20 überdeckendes, fehlplatziertes Fördergut 60 oder Fremdobjekt detektiert, kann das Bedienpersonal durch eine entsprechende Warnung auf dieses hingewiesen werden, welches daraufhin das fehlplatziertes Fördergut 60 oder Fremdobjekt entfernt bzw. korrekt in der Förderschale 7 platziert.

Bevorzugt wird die Förderanlage angehalten und so in einen sicheren Betriebszustand überführt, bis das fehlplatzierte Fördergut bzw. Fremdobjekt entfernt bzw. ausgeschleust ist.

Das Messverfahren sowie die Festlegung der Messintervalle folgt in analoger Weise zu den weiter oben beschriebenen Ausführungsformen im Zusammenhang mit Durchbrüchen 23 in der schwenkbaren Seitenwand 15, 16 bzw. im Förderschalenboden 19.

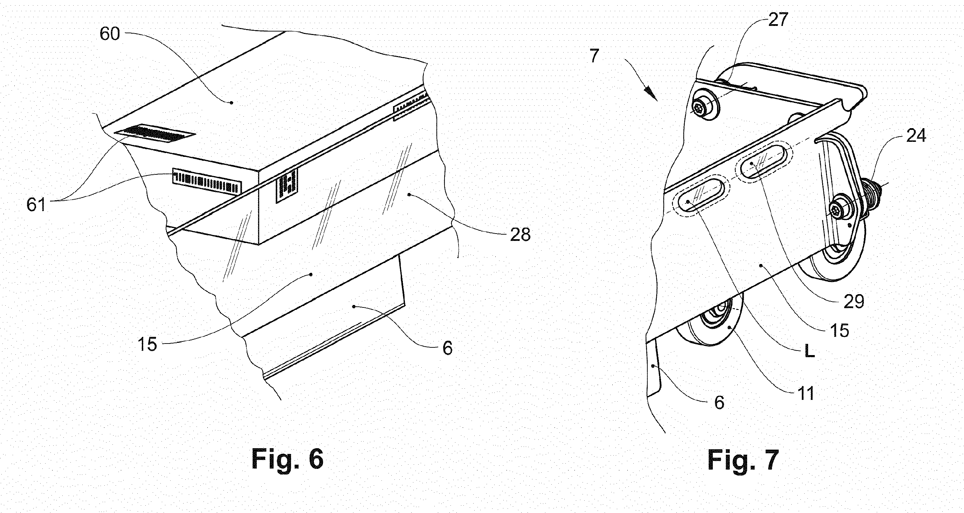

Die **Figur 6** zeigt einen Ausschnitt einer weiteren Ausführungsform einer Fördereinheit bzw. Förderschale, bei welcher jeweils der Durchlassbereich 28 durch die schwenkbaren Seitenwände 15, 16 selbst ausgebildet wird, welche aus einem transparenten Material, wie Glas oder Acrylglas bestehen.

Es kann auch vorgesehen sein, dass der Förderschalenboden oder die Abdeckvorrichtung 20 bzw. die Abdeckplattenelement 21.1, 21.2 aus einem transparenten Material, wie Glas oder Acrylglas bestehen und so den Durchlassbereich ausbilden.

Die **Figur** 7 zeigt einen Ausschnitt einer weiteren Ausführungsform einer Fördereinheit bzw. Förderschale, bei welcher die Durchlassöffnungen als Sichtfenster 29 ausgebildet sind. Die Sichtfenster 29 können z. B. aus einem transparenten Material, wie Glas oder Acrylglas bestehen.

Grundsätzlich können die in den Figuren 2 bis 5 gezeigten Durchbrüche auch Sichtfenster sein.

## Patentansprüche

1. Förderanlage (1) zum Fördern und Abgeben von Fördergütern (60), enthaltend einen Schalenförderer (40) mit einer Mehrzahl von entlang einer Förderbahn (2) bewegbaren Förderschalen (7), wobei die Förderschalen (7) jeweils mindestens ein Förderschalenelement (15-20) umfassen, sowie enthaltend mindestens eine entlang der Förderbahn (2) der Förderschalen (7) angeordnete Sensoreinrichtung (50) zum Detektieren von Fördergütern (60),
**dadurch gekennzeichnet, dass**
das mindestens eine Förderschalenelement (15-21.2) mindestens einen Durchlassbereich (23, 28, 29) aufweist, und die Sensoreinrichtung (50) derart ausgebildet und angeordnet ist, dass ein Messstrahlengang (52) der Sensoreinrichtung (50) in einer definierten Förderposition des mindestens einen Förderschalenelementes (15-20) durch den mindestens einen Durchlassbereich (23, 28, 29) am mindestens einen Förderschalenelement (15-20) gerichtet ist.

2. Förderanlage nach Anspruch 1, **dadurch gekennzeichnet, dass** die Sensoreinrichtung (50) dazu ausgelegt ist, eine mindestens teilweise Überdeckung des mindestens einen Durchlassbereichs (23, 28, 29) im mindestens einen Förderschalenelement (15-20) durch ein Fördergut (60) oder Fremdobjekt zu detektieren.

3. Förderanlage nach einem der Ansprüche 1 bis 2, **dadurch gekennzeichnet, dass** der mindestens eine Durchlassbereich (23, 28, 29) eine Durchlassöffnung (23, 29) im Förderschalenelement (15-20) ist, und die mindestens eine Durchlassöffnung (23, 29) insbesondere ein Sichtfenster (29) oder ein Durchbruch (23) ist.

4. Förderanlage nach einem der Ansprüche 1 bis 3, **dadurch gekennzeichnet, dass** die Sensoreinrichtung (50) mindestens eine Sensoreinheit (51), insbesondere mindestens eine optoelektronische Sensoreinheit, wie Lasersensoreinheit, umfasst.

5. Förderanlage nach Anspruch 4, **dadurch gekennzeichnet, dass** die Sensoreinrichtung (50) mehrere, voneinander beabstandete Sensoreinheiten (51), insbesondere mehrere optoelektronische Sensoreinheiten, wie Lasersensoreinheiten, enthält, deren Messstrahlengänge (52):
- in Förderrichtung (F) aufeinanderfolgend, und/oder
- quer zur Förderrichtung (F) aufeinanderfolgend
angeordnet sind.

6. Förderanlage nach einem der Ansprüche 1 bis 5, **dadurch gekennzeichnet, dass** die Förderschale (7) einen Aufnahmeraum (8) zur Aufnahme eines Förderguts (60) ausbildet und das mindestens eine Förderschalenelement (15-20) eine, den Aufnahmeraum (8) begrenzende, schwenkbare Seitenwand (15, 16) ist.

7. Förderanlage nach Anspruch 6, **dadurch gekennzeichnet, dass** die Förderanlage (1) mindestens eine entlang der Förderbahn (2) angeordnete Abgabestation (4) zur Abgabe eines Fördergutes (60) von der Förderschale (7) umfasst, und die Sensoreinrichtung (50) derart angeordnet ist, dass ein Messstrahlengang (52) der Sensoreinrichtung (50) in einem Messintervall an der Abgabestation (4) durch den mindestens einen Durchlassbereich (23, 28, 29) des an der Abgabestation (4) zwecks Abgabe des Fördergutes (60) heruntergeschwenkte Seitenwand (15, 16) der Förderschale (7) gerichtet ist.

8. Förderanlage nach einem der Ansprüche 6 bis 7, **dadurch gekennzeichnet, dass** die Sensoreinrichtung (50) dazu ausgelegt ist, an der Abgabestation (4) eine mindestens teilweise Überdeckung des mindestens einen Durchlassbereichs (23, 28, 29) der heruntergeschwenkten Seitenwand (15, 16) durch ein Fördergut (60) zu detektieren, insbesondere eine temporäre Überdeckung durch ein von der Förderschale (7) über die heruntergeschwenkte Seitenwand (15, 16) an die Abgabestation (4) abrutschendes Fördergut (60) zu detektieren.

9. Förderanlage nach einem der Ansprüche 1 bis 8, **dadurch gekennzeichnet, dass** das mindestens eine Förderschalenelement ein Abdeckelement (21) einer Abdeckvorrichtung (20) zum wenigstens teilweisen Überdecken eines Zwischenraums (9) zwischen zwei entlang der Förderbahn (2) benachbarten Förderschale (7) ausbildet.

10. Förderanlage nach Anspruch 9, **dadurch gekennzeichnet, dass** die Sensoreinrichtung (50) dazu ausgelegt ist, eine Überdeckung des durch den mindestens einen Durchlassbereich (23) im Abdeckelement (21) führenden Messstrahlengangs (52) durch ein fehlplatziertes Fördergut (60) bzw. Fremdobjekt zu detektieren.

11. Verfahren zum Detektieren von, mittels einer Förderanlage (1) nach einem der Ansprüche 1 bis 10 geförderten Fördergüter (60),
**dadurch gekennzeichnet, dass**
ein Messstrahl (52) der Sensoreinrichtung (50) in einer definierten Förderposition des mindestens einen Förderschalenelements (15-20) durch den mindestens einen Durchlassbereich (23, 28, 29) des mindestens einen Förderschalenelements (15-20) gerichtet ist, und eine Überdeckung des durch den Durchlassbereich (23, 28, 29) führenden Messstrahlengangs (52) durch ein Fördergut (60) detektiert.

12. Verfahren nach Anspruch 11, **dadurch gekennzeichnet, dass** die Sensoreinrichtung (50) eine optoelektronische Sensoreinheit (51) enthält, mittels welchem die Reflexion des Messstrahls (52) an dem, den mindestens einen Durchlassbereich (23, 28, 29) mindestens teilweise überdeckenden Fördergut (60) erfasst wird.

13. Verfahren nach einem der Ansprüche 11 bis 12, **dadurch gekennzeichnet, dass** mittels der Sensoreinrichtung (50) ermittelt wird, ob ein Fördergut (60) an der Abgabestation (4) über die heruntergeschwenkte Seitenwand (15, 16) von der Förderschale (7) zur Abgabestation (4) hin abgerutscht ist.

14. Verfahren nach einem der Ansprüche 11 bis 13, **dadurch gekennzeichnet, dass** Messstrahlen (52) von mehreren Sensoreinheiten (51) jeweils durch einen Durchlassbereich (23, 28, 29) in der herabgeschwenkten Seitenwand (15, 16) gerichtet sind, mittels welchen das Abrutschverhalten, wie Abrutschgeschwindigkeit, des Förderguts (60) ermittelt wird.

15. Verfahren nach einem der Ansprüche 11 bis 14, **dadurch gekennzeichnet, dass** Messintervalle auf die Förderbewegung bzw. auf den Fördertakt der Förderschalen (7) abgestimmt sind, wobei die Messintervalle jeweils synchron zur Bewegung des mindestens einen Durchlassbereichs (23, 28, 29), insbesondere der Durchlassöffnung (23, 29) durch den Messstrahlengang (52) der Sensoreinrichtung (40) erfolgen.
